# EUROPÄISCHE PATENTSCHRIFT

(11) **EP 0 648 002 B1**
(45) Veröffentlichungstag und Bekanntmachung des Hinweises auf die Patenterteilung: **05.11.1997**
(21) Anmeldenummer: 94113421.5
(22) Anmeldetag: 27.08.1994
(51) Int. Cl.: H02G 3/26, F16L 3/04

(54) **Nagelschelle**
Nail clamp
Collier de serrage à clou

(30) Priorität: 11.10.1993 DE 4334604
(43) Veröffentlichungstag der Anmeldung: 12.04.1995
(73) Patentinhaber: Adolf Würth GmbH & Co. KG, D-74653 Künzelsau (DE)
(72) Erfinder: Schuster, Armin, D-74670 Forchtenberg (DE); Mix, Bernd, D-74653 Künzelsau (DE)
(74) Vertreter: Patentanwälte Ruff, Beier, Schöndorf und Mütschele

(56) Entgegenhaltungen:
- CH-A- 672 947
- DE-U- 1 648 197
- FR-A- 2 530 385

## Beschreibung

Die Erfindung betrifft eine Nagelschelle gemäß dem Oberbegriff des Patentanspruchs 1.

Nagelschellen zur Befestigung von Kabeln und anderen Leitungen auf Wänden oder Decken sind für Handwerker und Heimwerker seit langem unentbehrliche Hilfsmittel. Sie werden üblicherweise zusammen mit passenden Nägeln geliefert, mit deren Hilfe sie auf Oberflächen genagelt werden, um dort Leitungen festzuklemmen. Im folgenden wird der Begriff Kabel für alle mit Nagelschellen befestigbaren Leitungen verwendet.

Bekannt sind einteilige, nach Spritzgußverfahren aus relativ hartem Kunstststoff hergestellte Nagelschellen, bei denen ein gekrümmtes, dem Umfang eines zu verlegenden Kabels in seinen Innendimensionen etwa angepaßtes, als Leitungsklemme ausgebildetes Greifelement an einem innen hohlen Fußteil ausgebildet ist. Das Greifelement umfaßt mehr als 180° eines zu verlegenden Kabels, und kann daher auf das Kabel aufgeschnappt werden, bevor das Kabel am Verlegungsort mit Hilfe der Schellen festgenagelt wird. Die gekrümmte Außenfläche des Greifelementes geht harmonisch in eine leicht gekrümmte Schellenoberfläche über, in der im Bereich des Fußteils ein Loch für einen Nagel vorgesehen ist. Eine spitztrichterförmige Senkung im Bereich des Loches sorgt dafür, daß der Nagel sich im letzten Stadium des Einschlagens mit seinem Kopf an der Schelle zentriert. Im hohlen Innenraum des Fußteils sind tangential zu dem Loch, durch das der Nagel geführt wird, zwei wandförmige Verstrebungen ausgebildet, die dem Fußteil mehr Stabilität verleihen und beim Einschlagen ein Ausbrechen des Nagels in Richtung der seitlichen Wände verhindert. Bei dieser Nagelschelle sollen gleichmäßig um den Innenumfang des Greifelements verteilte kleine Vorsprünge ein Verrutschen der Schelle auf dem Kabel erschweren.

Andere bekannte Schellen weisen bezüglich ihrer Form und des Materials, aus dem sie gefertigt sind, ebenfalls die oben genannten Merkmale auf, das Greifelement weist aber einen exakt halbbogenförmigen Innendurchmesser auf, so daß das freie Ende des Greifelementes bei befestigter Schelle fast senkrecht auf der Fläche steht, auf der die Schelle mit der am Fußteil ausgebildeten Auflagefläche auf der Oberfläche aufliegt. Derartige Schellen lassen sich ohne Kraftaufwand über ein zu verlegendes Kabel stülpen.

Das Problem bei herkömmlichen Schellen liegt häufig darin, daß bei unvorsichtiger Handhabung Nägel schräg eingeschlagen werden und manchmal auch so fest eingeschlagen werden, daß die Nagelschellen zerquetscht oder so stark verformt werden, daß sie ihre Funktion nur noch bedingt ausfüllen können.

Aus der FR-A-2 530 385 bzw. der DE 33 25 683 A1 ist ein ähnlich einer Nagelschelle auf einer Oberfläche aufzunagelnder Blockkörper bekannt, der auf seiner Unterseite querverlaufende, tunnelartige Ausnehmungen aufweist, durch die hindurch die zu befestigenden Leitungen geführt werden. In dem Blockkörper sind senkrecht zur Unterseite verlaufende Führungen ausgebildet, durch die Befestigungsstifte geführt werden und um deren obere Öffnung ringförmige erhabene Vorsprünge verlaufen. Die ringförmigen Vorsprünge sollen der Aufnahme der Schlagenergie des Hammers bei Einschlagen der Befestigungsstifte dienen. Ringförmige Vorsprünge um die obere Öffnung einer Nagelführung sind auch bei Schalungsmuffen bekannt (CH-A-672 947). Das obere Ende eines Stiftes oder Nagels kann, auch wenn dies gewünscht sein sollte, praktisch nicht weiter als bis zur Ebene des oberen Randes eines ringförmigen Vorsprunges eingeschlagen werden.

Aufgabe der Erfindung ist es, eine leicht und sicher handhabbare, funktionssichere Nagelschelle zu schaffen.

Erfindungsgemäß wird diese Aufgabe durch eine Nagelschelle mit den Merkmalen des Patentanspruches 1 gelöst. Eine erfindungsgemäße Nagelschelle weist Dämpfungsmittel zur Abdämpfung der Schlagwirkung bei eingeschlagenem Nagel auf, die als mindestens ein im wesentlichen über die gesamte Breite der Nagelschelle verlaufender gerader Dämpfungssteg ausgebildet sind. Erfahrungsgemäß neigen Anwender häufig dazu, einem bereits weitgehend eingeschlagenen Nagel nochmals einen kräftigen Schlag zu versetzen, um sicherzugehen, daß die Nagelschelle möglichst festsitzt. Gerade der letzte Schlag jedoch kann unter Umständen im Effekt zu einer Verschlechterung der Funktion der Nagelschelle führen. Insbesondere im Bereich der den Nagelkopf aufnehmenden, trichterförmigen Senkung kann es durch ungedämpftes Einschlagen des Nagel zu einer Keilwirkung durch den Nagelkopf kommen, durch die unter Umständen die Nagelschelle gespalten oder zumindest stark deformiert werden kann. Ein durch einen letzten Schlag zu weit eingeschlagener Nagel kann auch durch die sich danach wieder entspannende Nagelschelle minimal wieder herausgezogen werden, so daß die Haftung des Nagels in seinem Loch in der Wand vermindert wird. Bei erfindungsgemäßen Nagelschellen treten diese Probleme nicht auf, da sie so ausgebildet sind, daß sie mindestens einen Teil der auf den Nagelkopf gerichteten Wucht direkt aufnehmen und dadurch ein zu weit gehendes Eintreiben des Nagels verhindern.

Die Dämpfungswirkung wird durch mindestens einen, im wesentlichen über die gesamte Breite der Nagelschelle verlaufenden, geraden Dämpfungssteg erreicht, der vorzugsweise parallel zu der Richtung ausgerichtet ist, in die eine Leitung durch die Nagelschelle verläuft (Leitungsrichtung). Er kann auf der steilen, verstärkten Rückwand des Fußteils ausgebildet sein. Dies ist zweckmäßig, da dadurch zum einen die Verteilung der Schlagkraft auf tragfähige Teile des Fußteils sichergestellt ist. Eine nur einseitige seitliche Anordnung erlaubt es andererseits, bei Bedarf den Hammer bewußt so zu führen, daß er den Dämpfungssteg nicht trifft und sanft und gezielt auf den Nagelkopf geschlagen werden kann.

Mit Vorteil können die Dämpfungsmittel als Erhöhungen ausgebildet sein, die im Bereich einer oberen Mündung der Nagelführung angeordnet sind. Fertigungstechnisch besonders einfach ist es, eine oder mehrere Erhöhungen einstückig mit dem Fußteil auszubilden. U-förmig um die obere Mündung herum verlaufende Stege, die aus einzelnen geraden Stegen aufgebaut sind, sind denkbar, genauso wie keil- oder kalottenförmige Erhöhungen, von denen mehrere um die Mündung herum verteilt sein können. Vorzugsweise sind die Erhöhungen stegförmig ausgebildet.

Es ist zweckmäßig, die Erhöhungen zu einer solchen Höhe auszubilden, daß ihr oberer Bereich etwa in der Höhe liegt, um die ein Kopf eines vollständig eingeschlagenen Nagels die Schellenoberfläche überragt. Die Erhöhungen können insbesondere auch geringfügig höher sein als diese Höhe. Es wird damit in einfacher Weise sichergestellt, daß bei vollständig eingeschlagenem Nagel sich die Kraft jedes weiteren Schlages auf den Nagel auf eine wesentlich größere Fläche insbesonders auf tragfähige Teile des Fußteils verteilt. Der Nagel selbst erfährt dadurch nur einen geringen Teil der Schlagkraft, was in vorteilhafter Weise die Zerstörungswirkung des Nagelkopfs auf die Nagelschelle, insbesondere die Keilwirkung des an seiner Unterseite angeschrägten Nagelkopfes, vermindert. Bei typische Nagelschellen können die Erhöhungen eine Höhe von ca. 0,3 bis 0,7 mm aufweisen.

Es ist möglich, die Nagelschellen aus Vollmaterial herzustellen. Bevorzugt ist es, das Fußteil, das innen teilweise hohl ist, als zum Bereich der Auflagefläche hin offenes Teil auszubilden. Die Auflagefläche des Fußteils ist die Fläche, mit der das Fußteil auf der Oberfläche aufliegt, auf der das Kabel befestigt werden soll. Das hohle Fußteil kann durch Seitenwände begrenzt sein und im Bereich der Schellenoberfläche, also der Fläche, die dem schlagenden Hammer zugewandt ist, bis auf das Loch zur Einführung des Nagels im wesentlichen geschlossen sein. Die Leitungsklemme kann in bekannter Weise einstückig mit dem Fußteil ausgebildet sein. Zur Herstellung derartiger, teilweiser hohler Nagelschellen ist nur wenig Material notwendig, die Nagelschellen sind außerdem besonders leicht. Solche Nagelschellen sind einfach durch Spritzgußverfahren herstellbar. Bevorzugt sind Nagelschellen aus Polyethylen, Polypropylen oder Polyamid. Die Zusammensetzung des Kunststoffes kann mit Vorteil so gewählt sein, daß die Nagelschelle zumindest teilweise biegeelastisch ist. Auch eine gewisse Biegeelastizität des Materials trägt dazu bei, die Gefahr der Zerstörung der Schelle z. B. durch Spaltwirkung des Nagels zu vermindern. Im Bereich der Leitungsklemme wirkt sich eine Materialelastizität ebenfalls positiv aus, da sie die Anpassung der Leitungsklemme an Leitungen verschiedener Durchmesser erleichtert und ein Festhalten der Leitungsklemme an der Leitung fördert.

Die etwa senkrecht zur Leitungsrichtung verlaufenden Seitenwände des Fußteils können mit Vorteil etwa senkrecht zur Auflagefläche und damit etwa parallel zueinander angeordnet sein. Auch geringe Abweichungen von der exakten Parallelität sind möglich. An etwa parallelen Seitenflächen kann die Nagelschelle beim Einschlagen des Nagels besonders sicher gehalten werden. Beim Festhalten mit u. U. feuchten oder schmierigen Fingern wird eine Schlupfwirkung vermieden, wie sie bei angeschrägten Seitenflächen, deren Abstand sich zur Schellenoberfläche hin deutlich vermindert, auftreten kann.

Mit Vorteil ist auch die am Fußteil auf der der Leitungsklemme abgewandten Seite ausgebildete Rückwand eben und kann mit der ebenfalls ebenen Schellenoberfläche im Bereich ihres Zusammentreffens eine scharf gekrümmte Kante bilden. Wenn der Winkel, unter dem diese beiden Flächen zusammentreffen, 90° nur wenig übersteigt, also z. B. etwa 95° bis 100° beträgt, steht die bei auf der Oberfläche aufgesetzter Nagelschelle etwa senkrecht auf der Oberfläche und kann die Schlagwirkung gut aufnehmen. Eine bevorzugte, im wesentlichen scharfe Krümmung der Kante und die etwa senkrechte Anordnung der Rückwand verhindern, daß bei einem unsauber geführten Schlag, der im Bereich der Kante auftrifft, die Nagelschelle in Richtung senkrecht zu dieser Kante weggedrückt wird. Dieses Problem trat bei Nagelschellen nach dem Stand der Technik, die einen sanft gekrümmten Übergang zwischen einer leicht gekrümmten Schellenoberfläche und der Rückwand aufweisen, gelegentlich auf.

Eine schnelle und sichere Verarbeitung der Nagelschellen wird bei einer bevorzugten Ausführungsform der Nagelschellen besonders vorteilhaft dadurch gefördert, daß die Nagelführung als ein von der Schellenoberfläche zur Auflagefläche durchgehender, mit seiner Längsachse im wesentlichen senkrecht zur Auflagefläche ausgerichteter Nagelführungskanal ausgebildet ist. In diesem Nagelführungskanal kann der Nagel spielfrei und gegebenenfalls leicht laufend geführt sein. Durch die Ausrichtung des Nagelführungskanals senkrecht zu Auflagefläche wird von Anfang an verhindert, daß ein Nagel schräg eingeschlagen wird. Ein Benutzer kann sich beim Schlagen von Anfang an darauf konzentrieren, den von der Nagelschelle lagerichtig gehaltenen Nagel mit dem Hammer zu treffen. Das den durchgehenden Nagelführungskanal umgebende durchgehende Rohr nimmt in axialer Richtung Last auf und verhindert eine Spreitzung des Fußteils.

Der Nagelführungskanal ist bei einer bevorzugten Ausführungsform im hohlen Fußteil in einer von der Schellenoberfläche zur Auflagefläche durchgehenden Röhre ausgebildet, deren Wandstärke im wesentlichen der Wandstärke der Seitenwände entsprechen kann, und die mit der zur Leitungsklemme hin gerichteten Vorderwand des Fußteils fest verbunden ist. Durch die relativ massive Ausgestaltung des den Nagelführungskanal umfassenden Rohres kann erreicht werden, daß das Rohr bei aufgesetzter Nagelschelle die Schellenoberfläche, und insbesondere den Bereich um die obere Mündung des Nagelführungskanals, also den Bereich, wo der Nagelkopf aufliegt, terstützt. Damit wird zum einen verhindert, daß die Schellenoberfläche durch den eingeschlagenen Nagel eingedrückt wird. Weiterhin würde das Nagelführungsrohr bei eingeschlagenem Nagel mit jedem weiteren Schlag longitudinal zusammengepreßt und würde dann aufgrund der Elastizität seines Materials ebenfalls als Stoßdämpfer wirken. Die besondere Ausgestaltung des Nagelführungskanals kann daher ebenfalls als Teil der Dämpfungsmittel angesehen werden. Durch die Ausgestaltung des Nagelführungskanals als relativ dickwandiges Rohr kann in dem Bereich, in dem bei eingeschlagenem Nagel der Nagelkopf sitzt, die Schellenoberfläche verstärkt werden. Dies wirkt einer möglichen, wenn auch durch die Dämpfungsmittel bereits stark verminderten Keilwirkung des Nagels weiter entgegen.

Der Nagelführungskanal weist im Bereich seiner oberen Mündung mit Vorteil eine als Nagelkopfsitz ausgebildete trichterförmige Erweiterung auf. Im Bereich dieser Erweiterung kann sich der eingeschlagene Nagel mit der Unterseite seines Kopfes praktisch auf dem oberen Ende des den Nagelführungskanal bildenden, dickwandigen Rohres aufstützen. Da der Nagelführungskanal die Aufgabe der Führung des Nagels von Anfang an übernimmt, ist eine beim Stand der Technik notwendige Zentrierung durch einen spitztrichterförmigen Nagelsitz bei einer erfindungsgemäßen Nagelschelle nicht erforderlich. Der Nagelsitz weist mit Vortei den Querschnitt eines flachen Trichters auf. Der Öffnungswinkel des Trichters kann mehr als 110°, vorzugsweise mehr als etwa 120°, betragen. Bei entsprechend angepaßter Unterseite des Nagelkopfes, die vorzugsweise eine der Flachtrichterform angepaßte Form aufweist, wirken über den Nagelkopf vermittelt die Schlagkräfte auf den Nagel im wesentlichen in Richtung des Nagels und nicht, wie bei einem Keil, quer zur Einschlagrichtung des Nagels. Dadurch, daß die Schlagwirkung im wesentlichen in Richtung des Nagelführungskanales bzw. des ihn umgebenden Rohres gelenkt wird, wird die Dämpfungswirkung des Rohres mit Vorteil nutzbar.

Die Leitungsklemme kann in bekannter Weise als ein sich im Querschnitt vom Fußteil her verjüngendes, im Bereich des Fußteils etwa parallel zur Schellenoberfläche ausgerichtetes und daran anschließend um die Leitungsrichtung herum gekrümmt verlaufendes, mehr als 180° umschließendes Greifelement mit einem freien Ende ausgebildet sein. Mit Vorteil kann die Leitungsklemme an ihrem freien Ende in Richtung auf das Fußteil hin gekrümmt und im wesentlichen parallel zu dieser Richtung elastisch federnd ausgebildet sein. Durch diese Formgebung in Verbindung mit der Biegeelastizität des Materials der erfindungsgemäßen Nagelschelle kann sich die Nagelschelle an Leitungen unterschiedlicher Durchmesser, die den Innendurchmesser des Greifelementes unter Umständen deutlich übersteigen, sicher festklemmen.

Da die Leitungsklemme unter Umständen Leitungen verschiedener Durchmesser sicher aufnehmen soll, ist es vorteihaft, sie an ihrem freien Ende in Richtung auf das Fußteil hin gekrümmt und parallel zu dieser Richtung elastisch federnd auszubilden. Bei einer Leitungsklemme, die mehr als 180° gebogen ist, kann eine Leitung zwischen Fußteil und freiem Ende der Leitungsklemme unter leichter Aufbiegung der Leitungsklemme gedrückt werden. Nach Eindrücken kann das freie Ende elastisch zurückfedern und kann so das Kabel mit einer gewissen Anpreßkraft festhalten. Dieses Festhalten verhindert sowohl ein Verrutschen der Nagelschelle auf der Leitung während der Montage, als auch, bei festgenagelter Nagelschelle, ein Durchrutschen des Kabels durch die Nagelschelle.

Dem gleichen Zweck der Verhinderung des Verrutschens der Nagelschelle auf der Leitung bzw. des Durchrutschens der Leitung durch die montierte Nagelschelle dienen bei einer bevorzugten Ausführungsform an der Leitungsklemme ausgebildete Leitungshaltmittel, die an der Innenseite der Leitungsklemme als nach innen zur Leitungsrichtung hin gerichtete Zähne ausgebildet sind. Diese können beispielsweise zapfenförmig, kalottenförmig oder auch kegelförmig mit abgerundeter Spitze sein. Spitzkegelförmig ausgebildete Zähne sind bevorzugt. Die Spitzen der Kegel können sich selbst bei geringen durch die elastische Leitungsklemme aufgebrachten Andruckkräften etwas in die weiche Isolierung eines Kabels eindrücken und so die Haltewirkung der Leitungsklemme verstärken. Die Höhe der Spitzkegel kann zwischen 0,2 und 0,8 mm, insbesondere zwischen 0,4 und 0,6 mm betragen.

Bei einer bevorzugten Ausführungsform sind die Leitungshaltemittel teilweise auf senkrecht zur Leitungsrichtung verlaufenden Haltestegen angeordnet, die im Anschluß an die Seitenwände des Fußteils an diesem ausgebildet sind und sich mit zunehmender Entfernung vom Fußteil in ihrer Höhe kontinuierlich bis auf null verringern. Eine in die Leitungsklemme eingedrückte Leitung kann sich in dem Bereich zwischen den Haltestegen etwas verbiegen, wenn der Haltedruck, der durch die Leitungsklemme ausgeübt wird, sich im Bereich der Haltestege konzentriert. Auch die Haltestege dienen damit dazu, den Halt der Nagelschelle auf einer Leitung zu verbessern und ein Durchrutschen einer Leitung durch die montierte Nagelschelle zu verhindern. Die vom Fußteil zur Leitungsklemme hin langsam auslaufenden Haltestege können zusätzlich zur Stabilisierung der Schellenoberfläche gegen Verbiegung dienen.

Vorzugsweise sind die Leitungshaltemittel, insbesondere die Spitzkegel, ungleichmäßig um den Innenumfang der Leitungsklemme verteilt angeordnet. Damit kann erreicht werden, daß im Bereich benachbarter, eng nebeneinander liegender Spitzkegel beide mit etwa gleicher Anpreßkraft auf eine eingedrückte Leitung drücken. Eine Leitung relaxiert dabei nur wenig in den Zwischenraum zwischen den eng aneinanderstehenden Spitzkegeln. Im Bereich eines weiter von benachbarten Spitzkegeln entfernten Spitzkegels reicht eine geringere Anpreßkraft zwischen Leitungsklemme und Leitung aus, um das Leitungshaltemittel mit einem gewissen Druck in den u. U. elastisch nachgiebigen äußeren Bereich einer Leitung hineinzupressen. Bei einer bevorzugten Ausführungsform sind daher die Leitungshaltemittel in ungleichen Abständen voneinander um den Innenumfang der Leitungsklemme verteilt, wobei zwei Reihen von je drei Leitungshaltemitteln vorgesehen sind, von denen pro Reihe ein Leitungshaltemittel im wesentlichen zur Auflagefläche hin wirkt, ein zweites etwa schräg zum Fußteil hin und ein drittes, einzeln stehendes Leitungshaltemittel in Richtung auf das federnde freie Ende der Leitungsklemme hin ausgerichtet ist. Mit dieser Anordnung kann erreicht werden, daß die beiden enger zusammenstehenden Leitungshaltemittel in die Richtungen wirken, in denen bei Einschlagen des Nagels die größte Kraft auf die Leitung wirkt, nämlich etwa senkrecht zur Oberfläche, auf der die Nagelschelle angebracht wird. Die Federkraft des federnden freien Endes der Leitungsklemme kann ausreichen, um eine Leitung weiterhin gegen das ihr gegenüberliegende einzelne Leitungshaltemittel anzupressen.

Die Ausbildung der Leitungsklemme mit den Leitungshaltemitteln ist daher mit dem Ziel optimiert, eine kraftschlüssige und im Bereich der Leitungshaltemittel gegebenenfalls auch formschlüssige Verbindung zwischen Nagelschelle und Leitung zubewirken. Die Befestigung der Nagelschelle selbst auf der Oberfläche kann daher für die Nagelschelle schonend mit sanften Schlägen ausgeführt werden, ohne daß über das Festnageln selbst und gegebenenfalls über eine Deformation der gesamten Nagelschelle eine Haltewirkung auf die Leitung ausgeübt werden muß. Bei der erfindungsgemäßen Nagelschelle wirken daher die Maßnahmen, die einer möglichen zerstörerischen Wirkung des Einschlagens des Nagels entgegenwirken, einerseits unabhängig von den Merkmalen, die den Halt der Nagelschelle auf der Leitung, bzw. den Halt der Leitung in der befestigten Nagelschelle verbessern. Andererseits wirken beide Merkmalsgruppen gemeinsam im Sinne einer leichteren und sichereren Handhabung der Nagelschelle bei gleichzeitiger Verbesserung der eigentlichen Funktion der Nagelschelle, nämlich der, eine Leitung dauerhaft und sicher, insbesondere auch durchrutschsicher, auf einer Oberfläche zu befestigen.

Weitere Merkmale und Einzelteile der Erfindung ergeben sich aus der nachfolgenden Beschreibung einer bevorzugten Ausführungsform in Verbindung mit der Zeichnung und den Unteransprüchen. Hierbei können die einzelnen Merkmale jeweils für sich alleine oder zu mehreren in Kombination miteinander bei einer Ausführungsform verwirklicht sein. Es zeigen:
- Fig. 1: einen Querschnitt durch eine erfindungsgemäße Nagelschelle,
- Fig. 2: eine Unteransicht der in Fig. 1 gezeigten erfindungsgemäßenNagelschelle und
- Fig. 3: eine Aufsicht auf die in Fig. 1 und 2 gezeigte Nagelschelle.

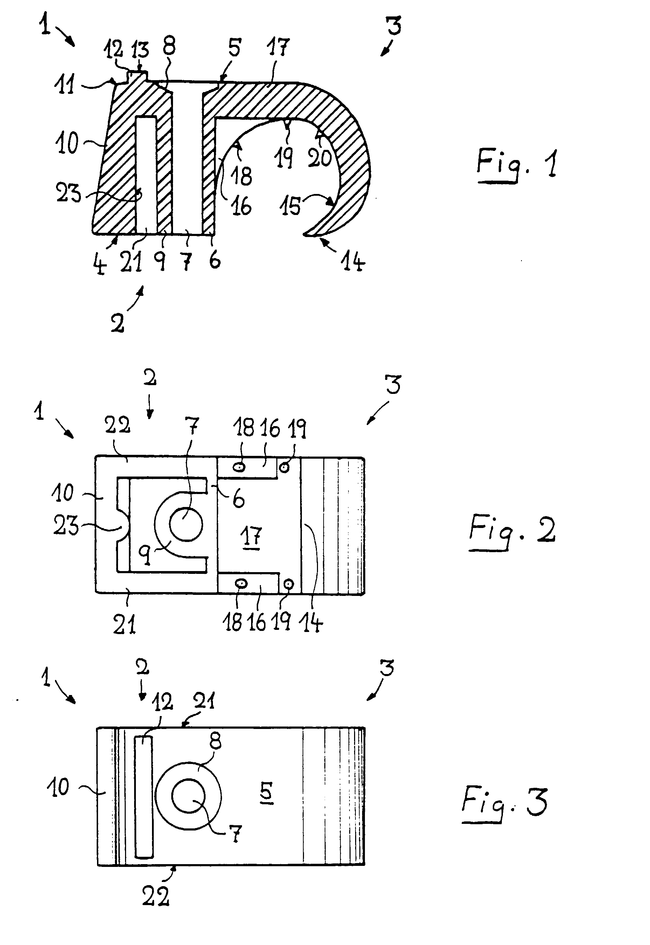

Bei der in dem Querschnitt in Fig. 1 gezeigten Nagelschelle 1 ist seitlich an einem Fußteil 2 einstückig mit diesem eine teilweise bogenförmig gekrümmte Leitungsklemme 3 ausgebildet. Das Fußteil ist zur ebenen Auflagefläche 4 hin teilweise offen und weist parallel zur Auflagefläche eine Schellenoberfläche 5 auf, die ebenfalls eben ist und sich in den Bereich der Leitungsklemme 3 erstreckt. Senkrecht zur Auflagefläche 4 und zur Schellenoberfläche 5 verläuft zwischen diesen im Bereich einer zur Leitungsklemme 3 hin gerichteten Vorderwand 6 des Fußteils 2 ein im Querschnitt runder Nagelführungskanal 7, der im Bereich der Schellenoberfläche 5 trichterförmig erweitert ist, so daß dort ein Nagelsitz 8 zur Aufnahme der Unterseite eines die Nagelschelle 1 haltenden Nagels ausgebildet ist. Der Nagelführungskanal 7 ist in einem Nagelführungsrohr ausgebildet, dessen Rohrwandung 9 im Bereich der Vorderwand 6 des Fußteils 2 mit der Vorderwand 6 zusammenfällt.

Die der Vorderwand 6 gegenüberliegende Rückwand 10 des Fußteils ist gegenüber der Auflagefläche 4 um einen Winkel von etwa 85° schräg angestellt und geht im Bereich der Schellenoberfläche 5 unter Bildung einer scharf gekrümmten Kante 11 in die Schellenoberfläche 5 über.

Zwischen der Kante 11 und dem Nagelsitz 8 ist auf der Schellenoberfläche 5 ein Dämpfungssteg 12 ausgebildet, dessen Aufschlagfläche 13 im wesentlichen parallel zur Schellenoberfläche 5 verläuft und dessen Seitenflächen etwa senkrecht zur Schellenoberfläche 5 stehen. Der Dämpfungssteg 12 verläuft parallel zur Kante 11 und zur Leitungsrichtung, die in Fig. 1 senkrecht zur Papierebene steht.

Die Leitungsklemme 3 verläuft anschließend an den zur Schellenoberfläche 5 parallelen Teil zum Bereich der Auflagefläche 4 hin etwa kreisbogenförmig gekrümmt und endet im Bereich der durch die Auflagefläche 4 definierten Ebene in einem sich immer mehr im Querschnitt verjüngenden freien Ende 14. Die Innenseite 15 der Leitungsklemme 3 ist ebenfalls etwa kreisförmig gekrümmt. Im Bereich des Fußteils 2 wird die kreisförmige Krümmung der Innenseite 15 von der Innenseite von Haltestegen 16 weitergeführt. In dem Querschnitt ist zu erkennen, daß zwischen den Haltestegen, von denen in der Fig. 1 nur ein Haltesteg 16 zu erkennen ist, die Leitungsklemme in Form einer planparallelen Platte 17 bis in den Bereich der Vorderwand 6 verläuft, auf die die Platte 17 im rechten Winkel stößt.

Auf dem Haltesteg 16 ist ein erster Spitzkegel 18 zu erkennen, der mit seiner Spitze etwa zum freien Ende 14 hin gerichtet ist. In relativ großem Umfangsabstand von dem ersten Spitzkegel ist nahe dem Endbereich des Haltestegs 16 an der Platte 17 ein zweiter Spitzkegel 19 angeordnet, der mit seiner Spitze in Richtung etwa senkrecht zu der durch die Auflagefläche 4 definierten Ebene verläuft. In relativ kleinem Umfangsabstand zu diesem zweiten Spitzkegel 19 ist ein dritter Spitzkegel 20 am gekrümmten Teil der Leitungsklemme 3 zu erkennen, dessen Spitze schräg zum unteren Bereich des Fußteils 2 weist. Weiterhin ist in Fig. 1 durch den Schnitt die hintere Seitenwand 21 des Fußteils 2 zu erkennen, die im Bereich der Leitungsklemme 3 als Haltesteg 16 ausgebildet ist.

Die Unteransicht in Fig. 2 verdeutlicht weitere Einzelheiten des Aufbaus der Nagelschelle 1. So ist zu erkennen, daß die Auflagefläche des Fußteils 2 einen etwa quadratischen Außenumfang hat. Das Fußteil 2 wird durch 4 Seitenwände begrenzt, nämlich die Vorderwand 6, die Rückwand 10, die hintere Seitenwand 21 und die vordere Seitenwand 22, wobei die Vorderwand 6 etwas dünner ist als die anderen Seitenwände. Die vordere Seitenwand 22 und die hintere Seitenwand 21 stehen praktisch senkrecht auf der Auflagefläche 4 parallel zueinander, ebenso ist die Vorderwand 6 senkrecht zur Auflagefläche 2 ausgerichtet. Die Rückwand 10 ist leicht angeschrägt, und an ihrer Innenseite ist eine senkrechte, im Querschnitt kalottenförmige Verstärkung 23 zu erkennen. Diese sorgt im Bereich der Angußstelle für einen guten Materialfluß und dient gleichzeitig als im wesentlichen senkrechte Unterstützung für den Dämpfungssteg 12.

Die Unteransicht zeigt deutlich, daß der Nagelführungskanal 7 in einem Rohr ausgebildet ist, dessen Rohrwandung 9 etwa die gleiche Dicke aufweist wie die Seitenwände des Fußteils 2. Das Rohr ist an der Vorderwand 6, senkrecht zur Auflagefläche 4 ausgerichtet, ausgebildet. Weiterhin ist zu erkennen, daß die Spitzkegel in Reihen angeordnet sind, die mit den Seitenwänden 21 bzw. 22 fluchten. Auf jeder Seite ist ein erster Spitzkegel 18 auf einem Haltesteg 16 angeordnet. In der Unteransicht in Fig. 2 ist weiterhin zu erkennen, daß die parallel zur Schellenoberfläche 5 verlaufende Platte 17 im Bereich des Fußteils das Fußteil nach oben hin, also zur Schellenoberfläche, abschließt.

In der Aufsicht auf die Nagelschelle in Fig. 3 ist zu erkennen, daß der Dämpfungssteg 12 auf der Schellenoberfläche 5 zwischen dem Nagelsitz 8 und der Kante 11 parallel zur Kante 11 verläuft und im wesentlichen die gesamte Breite der Nagelschelle zwischen der hinteren Seitenwand 21 und der vorderen Seitenwand 22 einnimmt.

Die Nagelschelle 1 funktioniert wie folgt. Zunächst ist der in den Figuren nicht gezeigte Nagel so weit in den Nagelführungskanal 7 eingesteckt, daß seine Spitze im Bereich der Auflagefläche 4 liegt. In diesem Zustand, in der die Nagelschelle auch geliefert werden kann, wird die Nagelschelle nun entweder auf ein zu befestigendes Kabel oder eine andere Leitung unter Aufbiegung der Leitungsklemme 3 aufgeschnappt und dann mit der Leitung zusammen auf die Oberfläche gelegt, auf der die Leitung befestigt werden soll, oder die Leitung wird bereits auf der Oberfläche gehalten und die Nagelschelle 1 wird dann auf die Leitung aufgeschnappt. Die Spitzkegel 18, 19, 20 können dabei, durch die Elastizität des freien Endes der Leitungsklemme unterstützt, im gegebenenfalls elastisch eindrückbaren Außenbereich der Leitung sich eindrücken.

Wenn die Nagelschelle und die Leitung lagerichtig auf der Oberfläche angeordnet sind, kann mit einem Hammer o. dgl. der Nagel eingeschlagen werden, bis die Unterseite des Nagelkopfes im Nagelsitz 8 aufliegt. Der Anwender braucht sich dabei um die Seitenführung des Nagels überhaupt nicht zu kümmern, denn dieser wird durch den Nagelführungskanal 7 automatisch senkrecht zur Oberfläche gehalten. Sitzt der Nagel mit seinem Kopf auf dem Nagelsitz auf, so ist die Oberseite des Nagels etwa auf Höhe der Aufschlagfläche 13 des Dämpfungsstegs 12. Die Wirkung eines weiteren Schlages auf den eingeschlagenen Nagel verteilt sich dann zu einem geringen Teil auf den Nagel selbst, zum überwiegenden Teil aber über den Dämpfungssteg 12 vermittelt auf die Rückwand 10 und die Seitenwände 21 und 22 des Fußteils sowie auf die Rohrwandung 9 des den Nagelführungskanal umgebenden Rohres. Durch die Elastizität all dieser miteinander zusammenhängenden Teile der Nagelschelle wird der Schlag weitgehend gedämpft, ohne daß es zu einer Zerstörung der Nagelschelle kommt. Die Schlagwirkung wird außerdem, ohne daß es zu einer Keilwirkung kommt, über den flach sich öffnende Nagelsitz 8 vorwiegend auf die Rohrwandung 9 des Nagelführungskanals 7 übertragen und dadurch gedämpft.

## Patentansprüche

1. Nagelschelle zur Befestigung von Kabeln und anderen Leitungen auf einer Oberfläche, mit einem eine Auflagefläche (4) und im wesentlichen parallel zu dieser eine Schellenoberfläche (5) aufweisenden Fußteil (2), mit einer im Fußteil (2) ausgebildeten Nagelführung (7) zur Führung eines zur Befestigung der Nagelschelle (1) auf der Oberfläche dienenden Nagels und mit einer am Fußteil (2) ausgebildeten, in der Leitungsrichtung offenen und auf der der Schellenoberfläche (5) abgewandten Seite zumindest teilweise geöffneten Leitungsklemme (3), gekennzeichnet durch Dämpfungsmittel (12) zur Abdämpfung der Schlagwirkung bei eingeschlagenem Nagel, wobei die Dämpfungsmittel (12) als mindestens ein im wesentlichen über die gesamte Breite der Nagelschelle (1) verlaufender gerader Dämpfungssteg (12) ausgebildet sind.

2. Nagelschelle nach Anspruch 1, dadurch gekennzeichnet, daß nur ein Dämpfungssteg (12) vorgesehen ist, der parallel zur Leitungsrichtung ausgerichtet ist.

3. Nagelschelle nach Anspruch 1 oder 2, dadurch gekennzeichnet, daß die Dämpfungsmittel (12) als Erhöhungen ausgebildet sind, die auf der Schellenoberfläche (5) im Bereich einer oberen Mündung der Nagelführung (7) angeordnet und insbesondere einstückig mit dem Fußteil (2) ausgebildet sind.

4. Nagelschelle nach einem der vorhergehenden Ansprüche, dadurch gekennzeichnet, daß die Dämpfungsmittel (12) eine Höhe aufweisen, die im wesentlichen der Höhe entspricht, um die ein Kopf eines vollständig eingeschlagenen Nagels die Schellenoberfläche (5) überragt.

5. Nagelschelle nach einem der vorhergehenden Ansprüche, dadurch gekennzeichnet, daß das Fußteil (2) als innen teilweise hohles, zum Bereich der Auflagefläche (4) hin offenens, durch Seitenwände (6, 10, 21, 22) begrenztes und im Bereich der Schellenoberfläche (5)im wesentlichen geschlossenes Teil ausgebildet ist, an dem einstückig die Leitungsklemme mit einen freien Ende (14) ausgebildet ist.

6. Nagelschelle nach einem der vorhergehenden Ansprüche, dadurch gekennzeichnet, daß an dem Fußteil (2) eine der Leitungsklemme (3) gegenüberliegende Rückwand (10) im wesentlichen eben ist und mit der zumindest bereichsweise ebenen Schellenoberfläche (5) unter Bildung einer scharf gekrümmten Kante (11) unter einem 90 Grad nur wenig übersteigenden Winkel zusammenläuft.

7. Nagelschelle nach einem der vorhergehenden Ansprüche, dadurch gekennzeichnet, daß die Nagelführung (7) als ein von der Schellenoberfläche (5) zur Auflagefläche (4) durchgehender, mit seiner Längsachse im wesentlichen senkrecht zur Auflagefläche (4) ausgerichteter Nagelführungskanal (7) ausgebildet ist.

8. Nagelschelle nach einem der vorhergehenden Ansprüche, dadurch gekennzeichnet, daß die Leitungsklemme (3) Leitungshaltemittel aufweist, die an einer Innenseite (15) der Leitungsklemme (3) als nach innen gerichtete, insbesondere spitzkegelförmige Zähne (18, 19, 20) ausgebildet sind.

9. Nagelschelle nach einem der vorhergehenden Ansprüche, dadurch gekennzeichnet, daß an der Innenseite (15) der Leitungsklemme (3) mindestens ein, vorzugsweise zwei senkrecht zur Leitungsrichtung verlaufende Haltestege (16) ausgebildet sind, wobei vorzugsweise Leitungshaltemittel (18) auf den Haltestegen (16) angeordnet sind.

10. Nagelschelle nach einem der vorhergehenden Ansprüche, dadurch gekennzeichnet, daß die Leitungshaltemittel (18, 19, 20) in ungleichen Abständen voneinander an der Innenseite (15) der Leitungsklemme (3) verteilt sind, wobei vorzugsweise zwei Reihen von je drei Leitungshaltemitteln vorgesehen sind, von denen in jeder Reihe ein Leitungshaltemittel (19) im wesentlichen senkrecht zur Auflagefläche (4), ein zweites Leitungshaltemittel (20) schräg zum Fußteil (2) hin und ein drittes Leitungshaltemittel (18) in Richtung auf das freie Ende (14) hin ausgerichtet ist.

## Claims

1. Nail clamp for fixing cables and other lines to a surface, with a base part (2) having a bearing surface (4) and, substantially parallel thereto, a clamp surface (5), with a nail guide (7) constructed in the base part (2) for guiding a nail to be used for fixing the nail clamp (1) to the surface and a cable clamp (3) constructed on the base part (2), open in the line direction and at least partly open on the side remote from the clamp surface (5), characterized by damping means (12) for damping the impact action with driven in nail, the damping means (12) being constructed as at least one straight damping web (12) running substantially over the entire width of the nail clamp (1).

2. Nail clamp according to claim 1, characterized in that there is only one damping web (12) oriented parallel to the line direction.

3. Nail clamp according to claim 1 or 2, characterized in that the damping means (12) are constructed as elevations, which are placed on the clamp surface (5) in the vicinity of an upper opening of the nail guide (7) and are in particular in one piece with the base part (2).

4. Nail clamp according to one of the preceding claims, characterized in that the damping means (12) have a height substantially corresponding to the height by which a head of a completely driven in nail projects over the clamp surface (5).

5. Nail clamp according to one of the preceding claims, characterized in that the base part (2) is constructed as an inwardly partly hollow part open towards the vicinity of the bearing surface (4), bounded by side walls (6, 10, 21, 22) and substantially closed in the vicinity of the clamp surface (5), on which is constructed in one piece the cable clamp with a free end (14).

6. Nail clamp according to one of the preceding claims, characterized in that on the base part (2) a rear wall (10) facing the cable clamp (3) is substantially planar and converges with the at least zonally planar clamp surface (5), accompanied by the formation of a sharply curved edge (11), under an angle only slightly exceeding 90°.

7. Nail clamp according to one of the preceding claims, characterized in that the nail guide (7) is constructed as a nail guidance channel (7) passing from the clamp surface (5) to the bearing surface (4) with its longitudinal axis substantially perpendicular to the bearing surface (4).

8. Nail clamp according to one of the preceding claims, characterized in that the cable clamp (3) has line holding means, which are constructed on an inside (15) of the cable clamp (3) as inwardly directed, particularly pointed cone-shaped teeth (18, 19, 20).

9. Nail clamp according to one of the preceding claims, characterized in that on the inside (15) of the cable clamp (3) are constructed at least one and preferably two holding webs (16) perpendicular to the line direction and preferably the line holding means (18) are located on holding webs (16).

10. Nail clamp according to one of the preceding claims, characterized in that the line holding means (18, 19, 20) are distributed with unequal mutual spacings on the inside (15) of the cable clamp (3) and preferably two rows of in each case three line holding means are provided, whereof in each row one line holding means (19) is substantially perpendicular to the bearing surface (4), a second line holding means (20) is inclined towards the base part (2) and a third line holding means (18) is directed towards the free end (14).

## Revendications

1. Collier de serrage à clou pour fixer des câbles et d'autres conduits à une surface, comprenant un pied (2) présentant une surface d'appui (4) et, autant dire parallèlement à celle-ci, une surface de collier (5), un guide-clou (7) ménagé dans le pied (2) et destiné à guider le clou servant à fixer le collier de serrage à clou (1) sur la surface, et une agrafe à conduit (3) réalisée dans le pied (2), ouverte dans la direction du conduit et ouverte, au moins en partie, du côté situé à l'opposé de la surface de collier (5), caractérisé par des éléments d'amortissement (12) servant à atténuer l'effet des coups lors de l'enfoncement du clou, les éléments d'amortissement (12) étant réalisés sous forme d'au moins une nervure d'amortissement (12) droite s'étendant sensiblement sur toute la largeur du collier de serrage à clou (1).

2. Collier de serrage à clou selon la revendication 1, caractérisé en ce qu'il n'est prévu qu'une seule nervure d'amortissement (12), orientée parallèlement à la direction du conduit.

3. Collier de serrage à clou selon la revendication 1 ou 2, caractérisé en ce que les éléments d'amortissement (12) sont réalisés sous forme d'élévations prévues sur la surface de collier (5), dans la zone d'une embouchure supérieure du guide-clou (7), et réalisées en particulier d'un seul tenant avec le pied (2).

4. Collier de serrage à clou selon l'une des revendications précédentes, caractérisé en ce que les éléments d'amortissement (12) présentent une hauteur correspondant sensiblement à la hauteur dont la tête d'un clou complètement enfoncé dépasse de la surface de collier (5).

5. Collier de serrage à clou selon l'une des revendications précédentes, caractérisé en ce que le pied (2) est réalisé sous forme d'une partie partiellement creuse à l'intérieur et ouverte vers la zone de la surface d'appui (4), délimitée par des parois latérales (6, 10, 21, 22) et autant dire fermée dans la zone de la surface de collier (5), et avec laquelle l'agrafe à conduit présentant une extrémité libre (14) est réalisée d'un seul tenant.

6. Collier de serrage à clou selon l'une des revendications précédentes, caractérisé en ce que sur le pied (2), une paroi arriere (10) opposée à l'agrafe à conduit (3) est sensiblement plane et converge avec la surface de collier (5) plane, du moins par endroits, en formant une arête (11) de courbure marquée et sous un angle qui ne dépasse que de peu 90 degrés.

7. Collier de serrage à clou selon l'une des revendications précédentes, caractérisé en ce que le guide-clou (7) est réalisé sous forme d'un conduit de guidage de clou (7) continu, de la surface de collier (5) à la surface d'appui (4), et orienté, avec son axe longitudinal, sensiblement à la perpendiculaire de la surface d'appui (4).

8. Collier de serrage à clou selon l'une des revendications précédentes, caractérisé en ce que l'agrafe à conduit (3) présente des moyens de retenue de conduit qui sont réalisés sous forme de dents (18, 19, 20), en particulier de forme conique pointue, tournées vers l'intérieur, sur une face intérieure (15) de l'agrafe à conduit (3).

9. Collier de serrage à clou selon l'une des revendications précédentes, caractérisé en ce qu'au moins une, et de préférence deux nervures de retenue (16) perpendiculaires à la direction du conduit sont formées sur la face intérieure (15) de l'agrafe à conduit (3), des éléments de retenue de conduit (18) étant prévus, de préférence, sur les nervures de retenue (16).

10. Collier de serrage à clou selon l'une des revendications précédentes, caractérisé en ce que les éléments de retenue de conduit (18, 19, 20) sont répartis à intervalles irréguliers sur la face intérieure (15) de l'agrafe à conduit (3), deux séries de chaque fois trois éléments de retenue de conduit étant de préférence prévues, dont un élément de retenue de conduit (19) de chaque série est orienté sensiblement à la perpendiculaire de la surface d'appui (4), un deuxième élément de retenue de conduit (20) est orienté en oblique par rapport au pied (2), et un troisième élément de retenue de conduit (18), dans la direction de l'extrémité libre (14).
